# EUROPEAN PATENT APPLICATION

(11) **EP 1 238 995 A1**
(43) Date of publication of application: **11.09.2002**
(21) Application number: 01105566.2
(22) Date of filing: 06.03.2001
(51) Int. Cl.: C08G 59/14, C08L 63/00

(54) **High functional polymers**

(71) Applicant: Vantico AG, 4057 Basel (CH)
(72) Inventor: Vantico AG, 4057 Basel (CH)

(57) **Abstract**

Compounds of the formula I 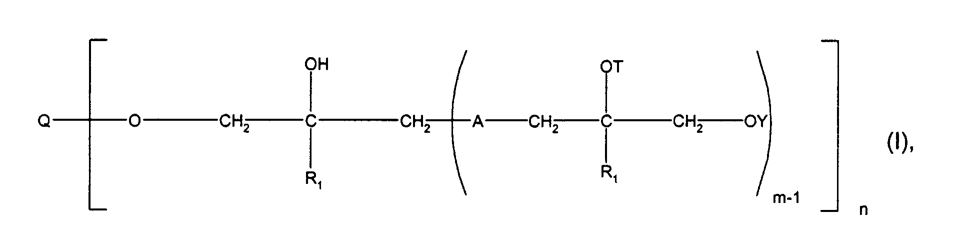 wherein Q denotes a n-valent residue of an aliphatic polyol having a weight average molecular weight m_{w} of 100 to 25000, n is an integer from 2 to 512,
R₁ is hydrogen or methyl,
A denotes a m-valent aliphatic, cycloaliphatic, aromatic or araliphatic radical, m is an integer from 2 to 4, and Y is -Z-CO-R₂ or R₃, wherein Z is a direct bond, C₂-C₁₀alkyleneoxy, phenyleneoxy, -(CH₂CH₂O)ₖ- or -(CHCH₃CH₂O)ₖ- and k is an integer from 1 to 20, R₂ denotes C₂-C₁₀alkenyl and R₃ is C₂-C₁₀alkenyl or C₁-C₁₂alkyl having at least one halogen or nitro substituent at the α-C-atom, phenyl having at least one halogen, nitro, alkyl, haloalkyl or alkoxy substituent or naphthyl having at least one halogen, nitro, alkyl, haloalkyl or alkoxy substituent,
T is hydrogen or has the same meaning as Y.
can be used as toughening agents for adhesive compositions and yield products of high fracture and impact toughness.

## Description

The present invention relates to high functional polymers containing at least two terminal reactive ester or ether groups, a process for the preparation of these compounds, curable compositions containing these compounds and the use of the curable compositions.

Densely packed, highly functionalised compounds are of considerable interest for applications in high performance plastics. Attributes of high fracture and impact toughness, high elongation and flexural strength as well as water/chemical resistance are being sought.

Because of their tendency to gellation the preparation of high functional polymers derived from polyepoxides in general is not easy.
In the International Application No. PCT/EP 00/05170 a process of reacting multifunctional hydroxy compounds with bis-cycloaliphatic epoxides to produce reaction products containing cycloaliphatic epoxides useful in curable compositions is described. Particular heterogeneous catalysts are required to promote the reaction. After reaction the catalyst is removed by filtration.

It has now been found that high functional polymers containing terminal reactive ester or ether groups having a low viscosity can be prepared by reaction of monomeric or polymeric compounds having at least two hydroxy groups with an excess of polyepoxides and subsequent reaction of the thus obtained intermediate with an unsaturated acid, alcohol or phenol.
In the present invention, it has been found particularly that in the first process step an in situ soluble catalyst can be used affording the capability to control, by suitable base inactivation, the amount of reaction promoted.
Further, the destroyed catalyst and any minor residual deactivator compound does not inhibit the use of the reaction products in subsequent curable compositions.
Thus the procedure described herein simplifies over the earlier method in that there is no need for filtration. Furthermore there is greater reaction control.

Accordingly, the present invention relates to a compound of the formula I 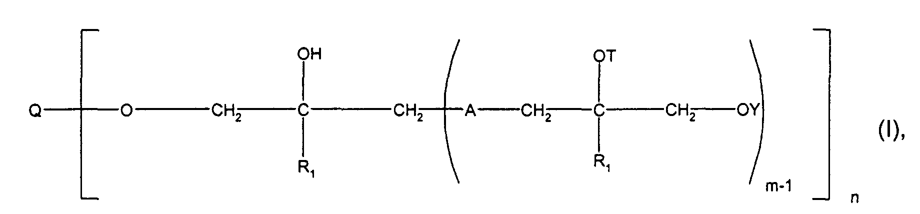 wherein Q denotes a n-valent residue of an aliphatic polyol having a weight average molecular weight m_{w} of 100 to 25000, n is an integer from 2 to 512,
R₁ is hydrogen or methyl,
A denotes a m-valent aliphatic, aromatic or araliphatic radical, m is an integer from 2 to 4, and Y is -Z-CO-R₂ or R₃, wherein Z is a direct bond, C₂-C₁₀alkyleneoxy, phenyleneoxy, -(CH₂CH₂O)ₖ- or -(CHCH₃CH₂O)ₖ- and k is an integer from 1 to 20,
R₂ denotes C₂-C₁₀alkenyl and R₃ is C₂-C₁₀alkenyl or C₁-C₁₂alkyl having at least one halogen or nitro substituent at the α-C-atom, phenyl having at least one halogen, nitro, alkyl, haloalkyl or alkoxy substituent or naphthyl having at least one halogen, nitro, alkyl, haloalkyl or alkoxy substituent,
T is hydrogen or has the same meaning as Y.

The radical Q is derived from multifunctional alcohols or multifunctional carboxylic acids. Preferred polyols are polyalkylene glycols, like polyethylene glycol, polypropylene glycol and polytetrahydrofurane, trimethylolpropane, ethoxylated trimethylolpropane, propoxylated trimethylolpropane, pentaerythritol, ethoxylated pentaerythritol, propoxylated pentaerythritol, polyglycols obtainable by reaction of pentaerythritol with ethylene oxide, propylene oxide, tetrahydrofuran or ε-caprolactone, dipentaerythritol, ethoxylated dipentaerythritol, propoxylated dipentaerythritol, polyglycols obtainable by reaction of dipentaerythritol with ethylene oxide, propylene oxide, tetrahydrofuran or ε-caprolactone, hydroxyl- or carboxyl-terminated dendritic macromolecules containing a nucleus derived from a monomeric or polymeric compound having at least one reactive hydroxyl, carboxyl or epoxy group per molecule and at least one branching generation derived from a monomeric or polymeric chain extender having at least three reactive sites per molecule selected from hydroxyl and carboxyl groups.

Dendritic macromolecules are well-known, for example from U.S. Patents Nos. 5,418,301 and 5,663,247, and partly commercially available (e.g. Boltorn® supplied by Perstorp). Hyperbranched and dendritic macromolecules (dendrimers) can generally be described as three dimensional highly branched molecules having a tree-like structure. Dendrimers are highly symmetric, while similar macromolecules designated as hyperbranched may to a certain degree hold an asymmetry, yet maintaining the highly branched tree-like structure. Dendrimers can be said to be monodisperse variations of hyperbranched macromolecules. Hyperbranched and dendritic macromolecules normally consist of an initiator or nucleus having one or more reactive sites and a number of surrounding branching layers and optionally a layer of chain terminating molecules. The layers are usually called generations, a designation hereinafter used.

In a preferred embodiment, the compounds of the formula I are derived from a polyethylene glycol, a polypropylene glycol, a polytetrahydrofurane or from a hydroxyl-terminated dendritic macromolecule containing 8 to 256 hydroxyl groups per molecule and having a weight average molecular weight m_{w} from 500 to 25000.

Moreover, compounds of formula I are preferred wherein R₁ is hydrogen, m is 2 and A is a bivalent radical of the formula Ila to lid 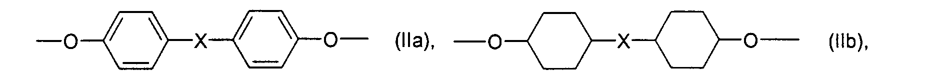 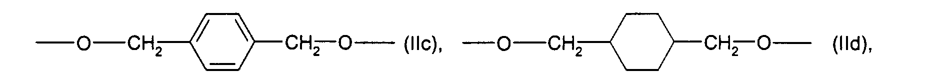 wherein X is a direct bond, methylene, isopropylidene, -CO- or -SO₂-.

Further preferred compounds of formula I are those wherein R₁ is hydrogen, m is 3 or 4 and A is a trivalent radical of the formula Illa or a tetravalent radical of formula Illb

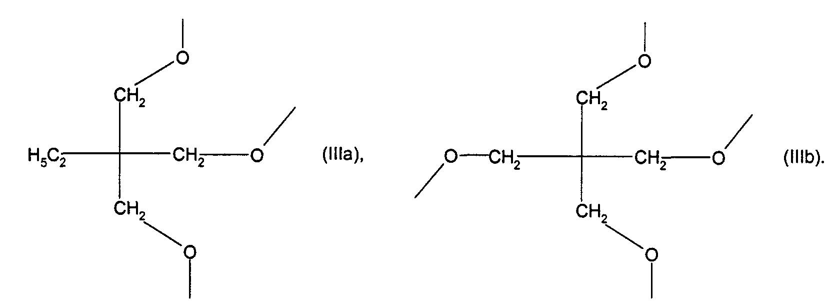

Further preferred compounds of formula I are those wherein Y denotes -Z-CO-R₂ wherein Z is a direct bond, -(CH₂CH₂O)ₖ- or -(CHCH₃CH₂O)ₖ and k is an integer from 1 to 4.

In particular, Y denotes -Z-CO-R₂ wherein R₂ is vinyl or 1-methylethenyl.

Compounds of formula I wherein Y is acryloyloxy or methacryloyloxy are particularly preferred.

Further preferred compounds of formula I are those wherein wherein T is acryloyl, methacryloyl or, in particular, hydrogen.

The reaction of difunctional alcohols with difunctional epoxy compounds using metal triflate catalysts and basic deactivators is described in EP-A 493 916.
Surprisingly we have found that the same synthetic methods can be extended to react multifunctional (>2) alcohols with di- or multifunctional epoxides to give higher molecular weight epoxy resins which then can further be reacted with unsaturated carboxylic acids, alcohols and phenols to yield high functional polymers of formula I.
There is reported work in the art seeking to achieve highly functional epoxy dendrimeric compounds; these have not been successful.
The present invention has achieved high functionalisation by both a combination of careful control of the reaction conditions and ensuring that the ratio of the starting epoxide to the starting hydroxyl compound is high enough so that gellation does not occur.

Accordingly, the present invention also relates to a process for the preparation of a compound of formula I according to claim 1 which comprises reacting a compound Q-(OH)ₙ wherein Q and n are as defined in claim 1 with a compound of formula IV 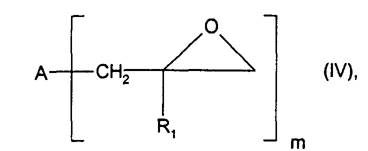 wherein A, R₁ and m are as defined in claim1, in such amounts that 1.5 to 15.0 epoxy equivalents are present per hydroxy equivalent in the presence of a triflate salt of a metal of Group IIA, IIB, IIIA, IIIB or VIIIA of the Periodic Table of the Elements (according to the IUPAC 1970 convention), optionally deactivating the triflate salt catalyst when the desired amount of modification has been achieved, and subsequently reacting the epoxy group containing intermediate thus obtained with a compound of the formula Y-H or Y-O-Y wherein Y is as defined above, in such amounts that at least one mol of the compound Y-H is present per mol epoxy groups of the intermediate.

Suitable hydroxy compounds Q-(OH)ₙ are basically all monomeric, oligomeric or polymeric compounds containing at least two hydroxy groups per molecule.
Examples are diethylene glycol, dipropylene glycol, polytetrahydrofurane, trimethylolpropane, pentaerythritol, bistrimethylolpropane, diglycerol, dipentaerythritol, 3,3,5,5-tetramethylol-4-hydroxypyran, sugar alcohols, polymers having a molecular weight of at most 8000 obtained by reaction of ethylene oxide, propylene oxide, tetrahydrofuran or ε-caprolactone and one or more of the aforementioned hydroxy compounds.

Hydroxy-terminated dendritic macromolecules are further suitable compounds Q-(OH)ₙ. Dendritic macromolecule can be obtained by reaction of
(A) a central monomeric or polymeric nucleus having at least one reactive hydroxyl, carboxyl or epoxy group per molecule,
(B) at least one branching monomeric or polymeric chain extender having at least three reactive sites per molecule selected from hydroxyl and carboxyl groups, optionally
(C) at least one spacing monomeric or polymeric chain extender having two reactive sites per molecule selected from hydroxyl and carboxyl groups.

Such dendritic macromolecules are described, for example, in U.S. Patents Nos. 5,418,301 and 5,663,247.
Specific examples of preferred aliphatic multihydroxy compounds Q-(OH)ₙ.(where n>4) include a range of dendritic polyols produced by Perstorp Polyols and sold under the Trade Name Boltorn® Dendritic Polymers. These include Boltorn® H20 (OH functionality = 16 and molecular weight = 1800) and Boltorn® H30 (OH functionality = 32 and molecular weight = 3600), Boltorn® H40 (OH functionality = 64 and molecular weight = 7200) and Boltorn® H50 (OH functionality = 128 and molecular weight = 14400), as well as such alcohols substituted by alkoxy groups as well as higher polyoxyethylene glycols, poloxypropylene glycols, polyoxytetramethylene glycols and polycaprolactone based on such alcohols.

Suitable epoxy compounds of formula IV are glycidyl esters, glycidyl ethers, N-glycidyl compounds, S-glycidyl compounds as well as the corresponding β-methylglycidyl compounds.

As examples of such resins may be mentioned glycidyl esters obtained by reaction of a compound containing two or more carboxylic acid groups per molecule, with epichlorohydrin or glycerol dichlorohydrin in the presence of an alkali hydroxide.
Such diglycidyl esters may be derived from aliphatic dicarboxylic acids , e.g. succinic acid, glutaric acid, adipic acid, pimelic acid, suberic acid, azelaic acid and dimerised linoleic acid; and from aromatic dicarboxylic acids such as phthalic acid, isophthalic acid and terephthalic acid.
Such triglycidyl esters may be obtained from aliphatic tricarboxylic acids, e.g. aconitic acid and citric acid, and from aromatic tricarboxylic acids such as 1,2,3 benzene tricarboxylic acid, 1,2,4 benzene tricarboxylic acid and 1,3,5 benzene tricarboxylic acid.

Further examples are glycidyl ethers obtained by reaction of a compound containing at least two free alcoholic hydroxy and/or phenolic hydroxyl groups per molecule with epichlorohydrin or glycerol dichlorohydrin under alkaline conditions or, alternatively, in the presence of an acid catalyst and subsequent treatment with alkali. These ethers may be made from acyclic alcohols such as ethylene glycol, diethylene glycol and higher poly(oxyethylene) glycols, propane-1,2-diol and poly(oxypropylene) glycols, propane-1,3-diol, butane-1,4-diol, poly(oxytetramethylene)glycols, pentane-1,5-diol, hexane-2,4,6-triol, glycerol, 1,1,1-trimethylolpropane, pentaerythritol, and sorbitol; and from alcohols made from aromatic nuclei, such as N,N-bis(2-hydroxyethyl)aniline and p,p¹-bis(2-hydroxyethylamino)diphenylmethane. Or may be made from mononuclear phenols such as resorcinol and hydroquinone, and from polynuclear phenols such as bis(4-hydroxyphenyl)methane, 4,4'-dihydroxyphenyl sulfone, 1,1,2,2-tetrakis(4-hydroxyphenyl)methane, 2,2-bis (4-hydroxyphenyl)propane, 2,2-bis(3,5-dibromo-4-hydroxyphenyl)propane (tetrabromobisphenol A), and novolaks formed from aldehydes such as formaldehyde, acetaldehyde, chloral and furfuraldehyde, with phenols such as phenol itself, and phenol substituted in the ring by chlorine atoms or by alkyl groups each containing up to nine carbon atoms, such as 4-chlorophenol, 2-methyl phenol and 4-tert-butylphenol.

Di(N-glycidyl) compounds include, for example, those obtained by dehydrochlorination of the reaction products of epichlorohydrin with amines containing at least two amino hydrogen atoms such as aniline, n-butyl amine, bis(4-aminophenyl)methane and bis(4-methylaminophenyl)methane; and N,N'-digylcidyl derivatives of cyclic ureas, such as ethylurea and 1,3-propyleneurea, and hydantoins such as 5,5-dimethylhydantoin.

Examples of di(S-glycidyl) compounds are di-S-glycidyl derivatives of thiols such as ethane-1,2-dithiol and bis(4-mercaptomethylphenyl) ether.

Preferred compounds of formula IV are diglycidylethers of bisphenols, cyclohexanedimethanol diglycidylether, trimethylolpropane triglycidylether and pentaerythritol tetraglycidylether.

Bisphenol A diglycidylether and trimethylolpropane triglycidylether are particularly preferred.

The triflate salts disclosed in EP-A 493 916 can also be used as catalyst in the first step of the process for the preparation of the compounds of formula I according to the present invention.
Preferably, the Group IIA metal triflate catalyst is magnesium triflate; the Group IIB metal triflate is preferably zinc or cadmium triflate; the Group IIIA metal triflate catalyst is preferably lanthanum triflate; the Group IIIB metal triflate is preferably aluminium triflate ; and the Group VIIIA triflate catalyst is preferably cobalt triflate.

The amount of the metal triflate catalyst used in the process of the invention ranges from 10 to 500 ppm, especially from 50 to 300 ppm, based on the total weight of the reaction mixture.

The avoidance of gellation requires to employ the starting epoxide and the starting hydroxyl compound in such amounts that a substantial excess of epoxy groups is present.

This ratio depends on the starting functionalities of both the hydroxy and epoxy groups present but usually falls in the region of hydroxy : epoxy of between 1:1.5 and 1:10, especially between 1:2 and 1:5.

In general it is convenient to employ the metal triflate catalyst in the form of a solution in an organic solvent. Examples of suitable solvents include aromatic hydrocarbon solvents; cycloaliphatic polar solvents such as cycloaliphatic ketones, e.g. cyclohexanone; polar aliphatic solvents such as diols, e.g. diethylene glycol, triethylene glycol, dipropylene glycol, tripropylene glycols as well as using the starting polyol where appropriate.

During the course of the reaction the amount of modification (10-100%) can be followed by measuring the epoxide content of the reaction mixture and the triflate catalyst may be deactivated once the desired amount of modification has been achieved.

As the process of modification proceeds secondary alcohol is generated. Depending on the amount of modification required, especially approaching 100%, the secondary alcohol groups can play a significant part in the reaction process and in some cases the epoxide content can be such that >100% modification can occur. In order to ensure that this process does not continue and lead to gellation (or high viscosity products) the amount of modification should aim not to exceed a maximum of 150% based on the starting alcohol.

Preferably, the triflate salt catalyst is deactivated when 10-100 % of the initial hydroxyl groups of the compound Q-(OH)ₙ has been epoxidised.

The triflate salt catalyst deactivation may be effected e.g. by addition of alkali metal hydroxides or tetraalkylammonium hydroxide salts. Alternatively, the metal triflate salt catalyst used in the process of the present invention can be deactivated by adding a metal complexing agent, e.g. 8-hydroxyquinoline.

The second step of the process, i.e. the addition of an unsaturated carboxylic acid, carboxylic acid anhydride, activated ester or activated alcohol to the epoxy group containing intermediate, is appropriately carried out at elevated temperature, preferably at 50 to 140 °C, in particular at 80 to 110 °C. Since this reaction is strongly exothermic, the acid, anhydride, ester or alcohol is preferably added to the epoxide in batches in order to achieve that the reaction temperature does not exceed 90 °C. After complete addition the reaction mixture may be heated to 90 to 100 °C.

Preferably 1 to 5 mol of the compound of the formula Y-H is employed per mol epoxy groups of the intermediate obtained by reaction of Q-(OH)ₙ with a compound of formula IV.

Suitable compounds Y-H are acrylic acid, methacrylic acid, crotonic acid and cinnamic acid.

Further suitable starting compounds Y-H are activated alcohols like, for example, trifluoroethanol and phenols like 4-tert.-butylphenol.

Suitable starting compounds Y-O-Y are primarily anhydrides of unsaturated carboxylic acids, for example acrylic acid anhydride, methacrylic acid anhydride, crotonic acid anhydride and cinnamic acid anhydride.

The present invention further relates to a curable composition containing
(a) an acrylic resin different from component (b) and
(b) a compound of formula I according to claim 1.

Acrylates and methacrylates known as ingredients of adhesive compositions can be employed as component (a). Suitable acrylic resins may be monoacrylic materials containing one acryloyloxy or methacryloyloxy group together with a hydroxyl or carboxyl group, a material containing on average, more than one acryloyloxy or methacryloyloxy group per molecule or a mixture of two or more thereof.

Preferred monoacrylic materials for use as (a) include hydroxyalkyl acrylates and hydroxyalkyl methacrylates such as 2-hydroxyethyl acrylate, 2-hydroxyproyl acrylate, 3-hydroxypropyl acrylate, 4-hydroxybutyl acrylate, the corresponding methacrylates and mixtures of two or more thereof; carboxyl acrylates and carboxyl methacrylates such as 2-carboxyethyl acrylate (which is commercially available as a product prepared by dimerisation of acrylic acid containing 10 % by weight of higher oligomers of acrylic acid) and 2-carboxy-2-methylethyl methacrylate (which can be prepared by dimerisation of methacrylic acid); and carboxyl group-containing adducts of a hydroxyalkyl acrylate or hydroxyalkyl methacrylate with a polycarboxylic acid anhydride.

Suitable materials having, on average, more than one one acryloyloxy or methacryloyloxy group per molecule include esters of epoxy resins with (meth)acrylic acid or with a carboxyl group-containing adduct of a hydroxyalkyl acrylate or hydroxyalkyl methacrylate with a polycarboxylic acid anhydride; the reaction products of a hydroxyalkyl acrylate or hydroxyalkyl methacrylate such as hereinbefore specified with an isocyanate-terminated prepolymer derived from a polyol and a polyisocyanate. Examples of esters of epoxy resins include esters of acrylic acid or methacrylic acid with resins having, on average, more than one glycidyl group per molecule, preferably polyglycidyl ethers of polyhydric alcohols such as butane -1,4-diol, neopentyl glycol or polypropylene glycols, polyglycidyl ethers of polyhydric phenols such as bisphenol F, bisphenol A or a novolak resin, and advancement reaction products of such polyglycidyl ethers with dihydric alcohols or phenols.

Preferred materials having, on average, more than one one acryloyloxy or methacryloyloxy group per molecule are polyacrylate and polymethacrylate esters of polyhydric alcohols , including esters of dihydric alcohols such as ethylene glycol, 1,2-propylene glycol, 1,3-propylene glycol, 1,3-butanediol, 1,4-butanediol, neopentyl glycol, 1,6-hexanediol, diethylene glycol, dipropylene glycol, triethylene glycol, tripropylene glycol, other polyoxyalkylene glycols and adducts of ethylene oxide and propylene oxide with polyhydric phenols such as bisphenol F or bisphenol A, esters of trihydric alcohols such as glycerol, 1,1,1-trimethylolpropane, adducts of these alcohols with ethylene oxide or propylene oxide, and trishhydroxyethyl isocyanurate, and esters of polyhydric alcohols having four or more hydroxyl groups such as erythritol, pentaerythritol xylitol and sorbitol. Many of these polyacrylate and polymethacrylate esters are available commercially. Those which are not may be readily prepared by reacting the alcohol with acrylic or methacrylic acid or, more usually, an esterifying derivative thereof such as acryloyl chloride or methacryloyl chloride, using conventional procedures.

Especially preferred materials for use as (a) are 2-hydroxyethyl acrylate 4-hydroxybutyl acrylate, 2-carboxyethyl acrylate, an adduct of 2-hydroxyethyl acrylate with maleic anhydride, ethylene glycol diacrylate, 1,3-butanediol diacrylate, 1,4-butanediol diacrylate, 1,6-hexanediol diacrylate, 1,1,1-trimethylolpropane triacrylate, pentaerythritol triacrylate. The corresponding methacrylates and mixtures of two or more thereof.

The crosslinked products obtained by curing a composition containing an epoxy resin and a compound of formula I exhibit excellent properties with respect to fracture and impact toughness, elongation and flexural strength as well as water/chemical resistance and are a further object of the invention.

The compositions according to the invention are excellently suitable as casting resins, laminating resins, adhesives, compression moulding compounds, coating compounds and encapsulating systems for electrical and electronic components, especially as adhesives.

The following examples are illustrative of the present invention and are therefore not intended as a limitation on the scope thereof.

### Examples:

### Preparation of Epoxide E-1

A three-neck flask is fitted with a mechanical stirrer, a thermometer and a vacuum line. Stirring is kept through the whole reaction. A mixture of bisphenol A diglycidylether having an epoxide content of 5.3 mol/kg (70.1g) and polytetrahydrofurane 650 (29.5g) is heated at 80°C under vacuum for 30 min. A 5% solution of lanthanum(III)triflate in polytetrahydrofurane 650 (0.4g) is added and the reaction is heated 3h at 130°C by which time the epoxide content has fallen to 3.0 mol/kg. A 2% solution of tetramethylammonium hydroxide in tripropylene glycol (0.4g) is added and the reaction is allowed to cool to room temperature under vacuum with agitation.

### Preparation of Epoxide E-2

A three-neck flask is fitted with a mechanical stirrer, a thermometer and a vacuum line. Stirring is kept through the whole reaction. A mixture of 133g trimethylolpropane triglycidylether having an epoxide content of 8.2 mol/kg and polytetrahydrofurane (Polymeg 1000) is dried 0.5h at 110°C under vacuum. 2.0 ml 5% lanthanum(III) triflate in tripropylene glycol is added and the mixture is heated at 145°C under vacuum for approximately 6-8 hours until the epoxide content has fallen to 2.2-2.4 mol/kg. 2.0 ml of tetramethylammonium hydroxide in tripropylene glycol is added as de-activator of the catalyst after the mixture has cooled to 100°C. The temperature is kept at 80°C for a further half hour.

### Preparation of Epoxide E-3

A three-neck flask is fitted with a mechanical stirrer, a thermometer and a vacuum line. Stirring is kept through the whole reaction. A mixture of 98g trimethylolpropane triglycidylether having an epoxide content of 8.2 mol/kg and 270g polypropylene glycol (Desmophen C200) is dried at 110°C for half an hour under vacuum. 2.0 ml 5% lanthanum(III) triflate in tripropylene glycol is added and the mixture is heated at 145°C under vacuum for approximately 6-8 hours until the epoxide content has fallen to 1.5-1.6 mol/kg. 2.0 ml of tetramethylammonium hydroxide in tripropylene glycol is added as de-activator of the catalyst after the mixture has cooled to 100°C. The temperature is kept at 80°C for a further half hour.

### Preparation of Epoxide E-4

A three-neck flask is fitted with a mechanical stirrer, a thermometer and a vacuum line. Stirring is kept through the whole reaction. A mixture of 107g trimethylolpropane triglycidylether having an epoxide content of 8.2 mol/kg and 40g Boltorn® H30 (a dendritic polyester polyol with theoretically 32 primary hydroxyl groups per molecule and a molecular weight of approximately 3600 g/mol supplied by Perstorp) is dried at 110°C under vacuum for half an hour. 1.2 ml 5% lanthanum(III) triflate in tripropylene glycol is added and the mixture is heated at 160°C for approximately 6-8 hours. 1.2 ml of tetramethylammonium hydroxide in tripropylene glycol is added as de-activator of the catalyst after the mixture has cooled to 100°C. The temperature is kept at 80°C for a further half hour.

### Preparation of Epoxide E-5

A three-neck flask is fitted with a mechanical stirrer, a thermometer and a vacuum line. Stirring is kept through the whole reaction. A mixture of 20g Boltorn® H30 (a dendritic polyester polyol with theoretically 32 primary hydroxyl groups per molecule and a molecular weight of approximately 3600 g/mol supplied by Perstorp) and 60.4g bisphenol A diglycidylether having an epoxide content of 5.3 mol/kg is dried at 110°C under vacuum for half an hour. 1.0 ml 5% lanthanum(III) triflate in tripropylene glycol is added and the mixture is heated at 160°C for approximately 6-8 hours. 1.0 ml of tetramethylammonium hydroxide in tripropylene glycol is added as de-activator of the catalyst after the mixture has cooled to 100°C. The temperature is kept at 80°C for a further half hour.

### Preparation of Epoxide E-6

A three-neck flask is fitted with a mechanical stirrer, a thermometer and a vacuum line. Stirring is kept through the whole reaction. A mixture of 20g Boltorn® H20 (a dendritic polyester polyol with theoretically 16 primary hydroxyl groups per molecule and a molecular weight of approximately 1800 g/mol supplied by Perstorp) and 62g bisphenol A diglycidylether having an epoxide content of 5.3 mol/kg is dried at 110°C under vacuum for half an hour. 1.0 ml 5% lanthanum(III) triflate in tripropylene glycol is added and the mixture is heated at 160°C for approximately 6-8 hours. 1.0 ml of tetramethylammonium hydroxide in tripropylene glycol is added as de-activator of the catalyst after the mixture has cooled to 100°C. The temperature is kept at 80°C for a further half hour.

### Preparation of Epoxide E-7

A three-neck flask is fitted with a mechanical stirrer, a thermometer and a vacuum line. Stirring is kept through the whole reaction. A mixture of bisphenol A diglycidylether having an epoxide content of 5.3 mol/kg (66.3g) and polypropylene glycol 770 (33.3g) is heated 30 min at 80°C under vacuum. A 5% solution of lanthanum(III)triflate in polytetrahydrofurane 650 (0.4g) is added and the reaction mixture is heated at 140°C for 5 hours by which time the epoxide content has fallen to 2.7 mol/kg. A 2% solution of tetramethylammonium hydroxide (0.4g) is added and the reaction is allowed to cool to room temperature under vacuum with agitation.

### Preparation of Epoxide E-8

A three-neck flask is fitted with a mechanical stirrer, a thermometer and a vacuum line. Stirring is kept through the whole reaction. A mixture of 1,4-cyclohexane dimethanol digylcidyl ether having an epoxide content of 5.8 mol/kg (516g) and Boltorn® H20 (a dendritic polyester polyol with theoretically 16 primary hydroxyl groups per molecule and a molecular weight of approximately 1800 g/mol supplied by Perstorp) (84g) is heated for 30 min at 80°C under vacuum. A 5% solution of lanthanum(III)triflate in tripropylene glycol (3.0g) is added and the reaction mixture is heated at 150°C for 11.5 hours by which time the epoxide content has fallen to 3.7 mol/kg. A 2% solution of tetramethylammonium hydroxide in tripropylene glycol (3.0g) is added and the reaction is heated at 120°C for 20 minutes under vacuum with agitation.

### Preparation of Acrylate A-1

A mixture of methacrylic acid (20.9g), 2,6-di-tert.-butyl-p-cresol (0.1g) and triphenylphosphine (0.2g) is slowly added to a mixture of Epoxide E-7 (100g) and 2,6-di-tert.-butyl-p-cresol (0.2g) at 100°C over 50 minutes. The reaction mixture is heated at 100°C for 6 hours. Subsequently further 0.2g of triphenylphosphine are added and the reaction mixture is heated at 100°C for further 3 hours.

### Preparation of Acrylates A-2 to A-9

A mixture of acrylic acid or methacrylic acid, respectively, and 2,6-di-tert-butyl-p-cresol (0.1g) is slowly added over 60 minutes to a mixture of epoxide, triphenylphosphine (0.3g) and 2,6-di-tert.-butyl-p-cresol (0.2g) at 90°C. The reaction mixture is subsequently heated at 90°C for 6 hours. The amounts of (meth)acrylic acid and epoxide are given in Table 1.

### Preparation of Acrylate A-10

A mixture of methacrylic anhydride (5.4g), 2,6-di-tert-butyl-p-cresol (0.3g) and tetramethyl ammonium hydroxide(0.3g) is slowly added to a mixture of Epoxide E-8 (90g) and 2,6-di-tert.-butyl-p-cresol (0.2g) at 100°C over 30 minutes. The reaction mixture is heated at 100°C for 4 hours by which time the epoxide content has fallen to 3.2 mol/kg.

### Preparation of Acrylate A-11

A mixture of acrylic acid (11g), 2,6-di-tert.-butyl-p-cresol (0.2g) triphenyl phosphine (0.2g) is slowly added to a mixture of Epoxide E-8 (80g) and 2,6-di-tert.-butyl-p-cresol (0.1g) at 100°C over 30 minutes. The reaction mixture is heated at 110°C for 3 hours by which time the epoxide content has fallen to 1.7 mol/Kg..

**Table 1:**

| Acrylate | Acid/Anhydride | Epoxide |
|---|---|---|
| A-1 | 20.9g methacrylic acid | 100g E-7 |
| A-2 | 7.2g methacrylic acid | 71.4g E-3 |
| A-3 | 9.4g methacrylic acid | 70.0g E-3 |
| A-4 | 5.9g acrylic acid | 70.2g E-3 |
| A-5 | 7.8g acrylic acid | 71.2g E-3 |
| A-6 | 19.3g methacrylic acid | 90.0g E-2 |
| A-7 | 15.6g acrylic acid | 90.0g E-2 |
| A-8 | 15.8g methacrylic acid | 82.0g E-6 |
| A-9 | 15.1g methacrylic acid | 80.0g E-5 |
| A-10 | 5.4g methacrylic anhydride | 90.0g E-8 |
| A-11 | 11.0g acrylic acid | 80.0g E-8 |

### Preparation of Acrvlate A-12

A three-neck flask is fitted with a mechanical stirrer, a thermometer and a vacuum line. Stirring is kept through the whole reaction. A mixture of bisphenol A diglycidylether having an epoxide content of 5.3 mol/kg (95g) and Boltorn® H20 (a dendritic polyester polyol with theoretically 16 primary hydroxyl groups per molecule and a molecular weight of approximately 1800 g/mol supplied by Perstorp)(5g) is heated for 30 min at 120°C under vacuum. A 5% solution of lanthanum(III)triflate in tripropylene glycol (0.5g) is added and the reaction mixture is heated at 150°C for 3 hours by which time the epoxide content has fallen to 4.3 mol/kg. A 2% solution of tetramethylammonium hydroxide in tripropylene glycol (0.5g) is added and the reaction is heated at 100°C for 20 minutes under vacuum. To this solution is added a mixture of acrylic acid (15.5g), 2,6-di-tert.-butyl-p-cresol (0.3g) and triphenyl phosphine (0.2g) over 30 minutes. The reaction mixture is heated at 110°C for 2.5 hours by which time the epoxide content had fallen to 1.7 mol/Kg.

### Application Example 1

An adhesive composition is prepared by mixing Acrylate A-11 and diethylenetriamine stoichiometrically at room temperature along with Ballotini glass beads to act as a 0.1 mm spacer. The adhesive iss applied to two 114 x 25 x 1.6mm degreased, chromic acid treated L165 aluminium pieces which are clamped together to form a joint of 25 x 12.5mm. After curing in an oven for 2 h at 60°C the lap-shear joint has formed a firm bond.

### Application Example 2

An adhesive composition is prepared by mixing Acrylate A-12 (50%), bisphenol A diglycidylether having an epoxide content of 5.3 mol/kg (50%) and diethylenetriamine stoichiometrically at room temperature along with Ballotini glass beads to act as a 0.1 mm spacer. The adhesive is applied to two 114 x 25 x 1.6mm degreased, chromic acid treated L165 aluminium pieces which are clamped together to form a joint of 25 x 12.5mm. After curing in an oven for 2 h at 60°C the lap-shear joint has formed a firm bond.

### Application Examples 3-5

Acrylate A-11 is mixed with photoinitiators as shown in Table 1, a sample of each material is K-bar coated (No.8, 100mm) onto degreased, chromic acid etched aluminium. The coated aluminium is passed once under a Fusion lamp with D bulb, on a conveyor belt running at 10m/min, to give tack free films.

**Table 2**

| Acrylate A-11 (g) | Irgacure 184 (g) | Cyracure UVI 6974 (g) |
|---|---|---|
| 4.8 | 0.2 | 0.0 |
| 4.8 | 0.0 | 0.2 |
| 4.6 | 0.2 | 0.2 |
| Irgacure 184 is a radical photoinitiator supplied by Ciba Specialty Chemicals Cyracure UVI 6974 is a cationic photoinitiator supplied by Union Carbide | | |

### Application Example 6

The components listed in Table 3 are used to formulate adhesive compositions. 1:1 weight ratio of adhesive and activator is used to prepare the composition with 0.2mm Ballotini glass brêads to control bond thickness. The adhesive is applied to two 114 x 25 x 1.6 mm degreased, chromic acid treated L165 aluminium pieces which are clamped together to form a joint of 25 x 12.5mm. After 72 hours curing at room temperature, the bonds strengths are tested.

**Table 3:**

| Composition | Adhesive (pbw) | Activator (pbw) |
|---|---|---|
| Methylmethacrylate | 60 | 62.5 |
| HYPALON 30 | 20.6 | |
| Acrylate A-9 | 7 | 10 |
| PARALOID EXL2655 | | 25 |
| Methacrylic acid | 10 | |
| t-Butyl perbenzoate | 2.4 | |
| Vulkacit 576 | | 2.5 |
| | | |
| Lap Shear Strength (N/mm²) | 30.5 | |
| HYPALON 30 is a chlorosulfonated polyethylene supplied by Dupont Dow Elastomers PARALOID EXL2655 is core-shell polymer supplied by Rohm & Hass Vulkacit 576 is free radical accelerator supplied by Rhein Chemie | | |

## Claims

1. A compound of the formula I 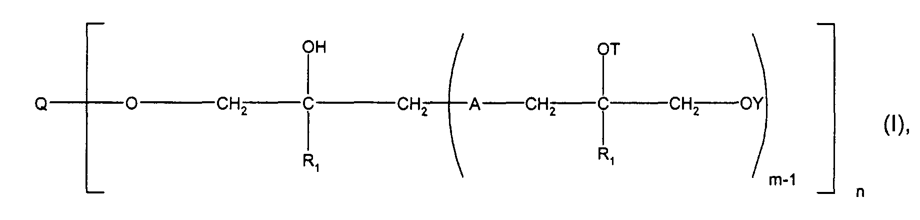 wherein Q denotes a n-valent residue of an aliphatic polyol having a weight average molecular weight m_{w} of 100 to 25000, n is an integer from 2 to 512,
R₁ is hydrogen or methyl,
A denotes a m-valent aliphatic, cycloaliphatic, aromatic or araliphatic radical, m is an integer from 2 to 4, and Y is -Z-CO-R₂ or R₃, wherein Z is a direct bond,
C₂-C₁₀alkyleneoxy, phenyleneoxy, -(CH₂CH₂O)ₖ- or -(CHCH₃CH₂O)ₖ- and k is an integer from 1 to 20, R₂ denotes C₂-C₁₀alkenyl and R₃ is C₂-C₁₀alkenyl or C₁-C₁₂alkyl having at least one halogen or nitro substituent at the α-C-atom, phenyl having at least one halogen, nitro, alkyl, haloalkyl or alkoxy substituent or naphthyl having at least one halogen, nitro, alkyl, haloalkyl or alkoxy substituent,
T is hydrogen or has the same meaning as Y.

2. A compound of formula I according to claim 1 wherein Q is the bivalent residue, after removal of the hydroxyl groups, of a polyalkylene glycol, the trivalent residue, after removal of the hydroxyl groups, of trimethylolpropane, ethoxylated trimethylolpropane or propoxylated trimethylolpropane, the tetravalent residue, after removal of the hydroxyl groups, of pentaerythritol, ethoxylated pentaerythritol, propoxylated pentaerythritol, a polyglycol obtainable by reaction of pentaerythritol with ethylene oxide, propylene oxide, tetrahydrofuran or ε-caprolactone, or Q is the hexavalent residue, after removal of the hydroxyl groups, of dipentaerythritol, ethoxylated dipentaerythritol, propoxylated dipentaerythritol, a polyglycol obtainable by reaction of dipentaerythritol with ethylene oxide, propylene oxide, tetrahydrofuran or ε-caprolactone, or Q is the residue of a hydroxyl- or carboxyl-terminated dendritic macromolecule containing a nucleus derived from a monomeric or polymeric compound having at least one reactive hydroxyl, carboxyl or epoxy group per molecule and at least one branching generation derived from a monomeric or polymeric chain extender having at least three reactive sites per molecule selected from hydroxyl and carboxyl groups.

3. A compound of formula I according to claim 1 wherein Q is the bivalent residue, after removal of the hydroxyl groups, of a polyethylene glycol, a polypropylene glycol or a polytetrahydrofurane or the residue of a hydroxyl-terminated dendritic macromolecule containing 8 to 256 hydroxyl groups per molecule and having a weight average molecular weight m_{w} from 500 to 25000.

4. A compound of formula I according to claim 1 wherein R₁ is hydrogen, m is 2 and A is a bivalent radical of the formula Ila to lId 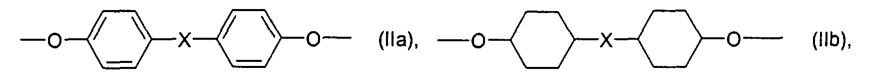 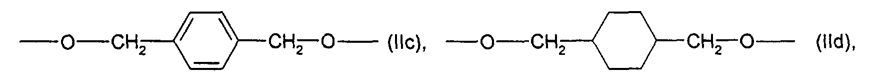 wherein X is a direct bond, methylene, isopropylidene, -CO- or -SO₂-.

5. A compound of formula I according to claim 1 wherein R₁ is hydrogen, m is 3 or 4 and A is a trivalent radical of the formula Illa or a tetravalent radical of formula Illb

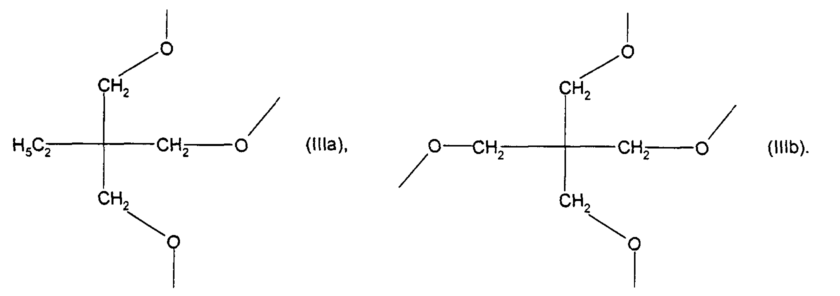

6. A compound of formula I according to claim 1 wherein Y denotes -Z-CO-R₂ wherein Z is a direct bond, -(CH₂CH₂O)ₖ- or -(CHCH₃CH₂O)ₖ and k is an integer from 1 to 4.

7. A compound of formula I according to claim 1 wherein Y denotes -Z-CO-R₂ wherein R₂ is vinyl or 1-methylethenyl.

8. A compound of formula I according to claim 1 wherein Y is acryloyl or methacryloyl.

9. A compound of formula I according to claim 1 wherein T is hydrogen, acryloyl or methacryloyl.

10. A process for the preparation of a compound of formula I according to claim 1 which comprises reacting a compound Q-(OH)ₙ wherein Q and n are as defined in claim 1 with a compound of formula IV 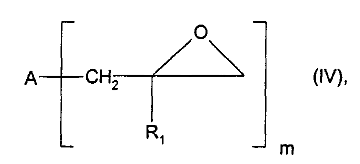 wherein A, R₁ and m are as defined in claim1, in such amounts that 1.5 to 15.0 epoxy equivalents are present per hydroxy equivalent in the presence of a triflate salt of a metal of Group IIA, IIB, IIIA, IIIB or VIIIA of the Periodic Table of the Elements (according to the IUPAC 1970 convention), optionally deactivating the triflate salt catalyst when the desired amount of modification has been achieved, and subsequently reacting the epoxy group containing intermediate thus obtained with a compound of the formula Y-H or Y-O-Y wherein Y is as defined in claim 1, in such amounts that at least one mol of the compound Y-H or Y-O-Y is present per mol epoxy groups of the intermediate.

11. A process according to claim 10 in which the deactivation of the triflate salt catalyst is effected by adding an alkali metal hydroxide or a metal complexing agent.

12. A process according to claim 10 in which the amount of the triflate salt catalyst ranges from 10 to 500 ppm, based on the total composition.

13. A process according to claim 10 for the preparation of a compound of formula I according to claim 1 which comprises employing the hydroxy compound Q-(OH)ₙ and the epoxy compound of formula IV in such amounts that the ratio of hydroxy groups : epoxy groups is between 1:1.5 and 1:10.

14. A process according to claim 10 for the preparation of a compound of formula I according to claim 1 **characterised in that** 1 to 5 mol of the compound of the formula Y-H or Y-O-Y is employed per mol epoxy groups of the intermediate obtained by reaction of Q-(OH)ₙ with a compound of formula IV.

15. A curable composition containing
(a) an acrylic resin different from component (b) and
(b) a compound of formula I according to claim 1.

16. The use of a composition according to claim 15 as adhesive.
